# EUROPEAN PATENT SPECIFICATION

(11) **EP 4 200 468 B1**
(45) Date of publication and mention of the grant of the patent: **28.01.2026**
(21) Application number: 21859456.2
(22) Date of filing: 24.08.2021
(51) Int. Cl.: D03D 15/513, D03D 15/267, D03D 19/00, A62C 2/06, C09K 21/02

(54) **INTUMESCENT NON-METAL MESH**
INTUMESZIERENDES NICHTMETALLISCHES NETZ
MAILLAGE NON-MÉTALLIQUE INTUMESCENT

(30) Priority: 24.08.2020 US 202063069670 P
(43) Date of publication of application: 28.06.2023
(73) Proprietor: Brightholme Inc., Edmonton, Alberta T6M 2P3 (CA)
(72) Inventor: WALL, Wesley James, Edmonton, Alberta T6M 2P3 (CA); WALL, Adam, Acheson, Alberta T7X 5A7 (CA); ADAB, Shekaib, Acheson, Alberta T7X 5A7 (CA)
(74) Representative: Appleyard Lees IP LLP
(86) International application number: PCT/CA2021/051175
(87) International publication number: WO 2022/040794

(56) References cited:
- CA-A1- 2 846 880
- CA-A1- 2 938 283
- CA-A1- 2 970 317
- DE-U1- 29 722 652
- GB-A- 2 303 788
- GB-A- 2 482 318
- US-A- 5 433 991
- US-A1- 2018 038 098
- SGODZAI: "Allgemeine bauaufsichtliche Zulassung Z-56.215-3441", 17 July 2006 (2006-07-17), Berlin, pages 1 - 9, XP093183497, Retrieved from the Internet <URL:https://www.dibt.de/de/service/zulassungsdownload/detail/z-56215-3441> [retrieved on 20240708]

## Description

### TECHNICAL FIELD

This relates to a mesh coated with intumescent material, and in particular, a non-metal, woven mesh.

### BACKGROUND

Intumescent materials are a class of substances that expand when exposed to high heat temperatures and direct flame. The expanded layer has a great ability to insulate and generally has low thermal conductivity. Intumescent coatings are often used and applied in passive fire resistance measures in buildings, construction, railroads, utility power poles, and other applications. United States pregrant pub. no. 2018/0038098 (Wall et al.) entitled "Intumescent Mesh" describes a flexible metal mesh with an intumescent coating, wherein the intumescent mesh comprises acrylic copolymer (35-56 w/w %), ammonium polyphosphate (3-21 w/w%), expandable graphite (3-21 w/w %), silica (<1 w/w %), and wire mesh (30-49 w/w %), and the mesh size is 6.35 mm (0.25 inch). Further intumescent meshes are disclosed in DE 297 22 652 U1 and US 5 433 991 A.

### SUMMARY

The invention provides an intumescent mesh according to claim 1.

According to other aspects, the intumescent mesh may additionally comprise one or more of the following aspects, alone or in combination: the openings may have an average size of about 0.25 inches +/- 0.06 inches; the mesh structure may be woven in a half Leno weave; the intumescent material may be activated at a temperature of at least 270°C; the intumescent mesh may be able to withstand the temperature of at least 980°C for at least 15 minutes prior to failure and failure may comprise a surface underlying the intumescent mesh, relative to a source of heat, reaching a temperature of about 150°C; the intumescent mesh may be able to withstand temperature surges of up to 1250°C for at least 1 minute without failure; the intumescent material and strands may be sized such that an available airflow area of the openings is about 25-75% of the mesh structure; the mesh structure with the intumescent material applied may be flexible; the mesh structure with the intumescent material may be applied is foldable; and the intumescent mesh may further comprise a surface coating applied between the mesh structure and the intumescent material, the surface coating being selected to improve adhesion between the mesh structure and the intumescent material.

The invention also provides a method of protecting a surface against fire or heat according to claim 7.

According to other aspects, the method may further comprise the following aspects, alone or in combination: the intumescent material may be installed such that, when activated, the intumescent material is in contact with the surface to be protected; the mesh structure may be treated with a surface coating selected to improve an adhesion between the mesh structure and the intumescent material; the openings may be about 0.25 +/- 0.06 inches; the strands may be woven using a half-Leno weave; the intumescent material may be activated at a temperature of at least 270°C; the intumescent mesh may be able to withstand the temperature of at least 980°C for at least 15 minutes prior to failure; failure may comprise the surface to be protected reaching a temperature of about 150°C; the intumescent mesh may be able to withstand temperature surges of up to 1250°C for at least 1 minute without failure; the intumescent material and strands may be sized such that an available airflow area of the openings is about 25-75% of the mesh structure; the intumescent mesh may be flexible; the intumescent mesh may be foldable; the method may further comprise a surface coating applied between the mesh structure and the intumescent material, the surface coating being selected to improve an adhesion between the mesh structure and the intumescent material.

### BRIEF DESCRIPTION OF THE DRAWINGS

These and other features will become more apparent from the following description in which reference is made to the appended drawings, the drawings are for the purpose of illustration only and are not intended to be in any way limiting, wherein:
FIG. 1a is a schematic view of a process of manufacturing an intumescent grid.
FIG. 1b is a schematic view of an alternate manufacturing process.
FIG. 2 is a top plan view of an intumescent grid.
FIG. 3 is a side elevation view in section of an intumescent mesh.
FIG. 4 is a side elevation view in section of an intumescent mesh after application of a temperature at or above the activation temperature.
FIG. 4A is a side elevation view in section of an intumescent mesh after application of a temperature at or above the activation temperature protecting a structure.
FIG. 5 is a top plan view in section of a square structure being protected by an intumescent mesh.
FIG. 6 is a top plan view in section of a round structure being protected by an intumescent mesh.
FIG. 7 is a side elevation view in section of an intumescent mesh installed as a soffit of a building.

### DETAILED DESCRIPTION OF PREFERRED EMBODIMENTS

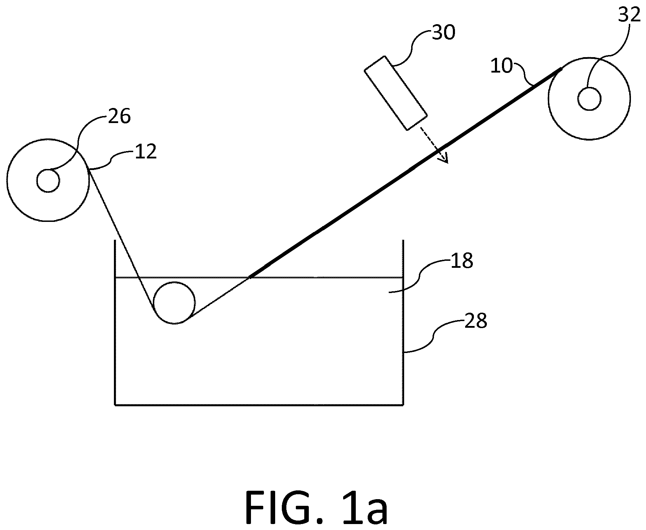

An intumescent mesh, generally identified by reference numeral 10, will now be described with reference to FIG. 1a through 7.

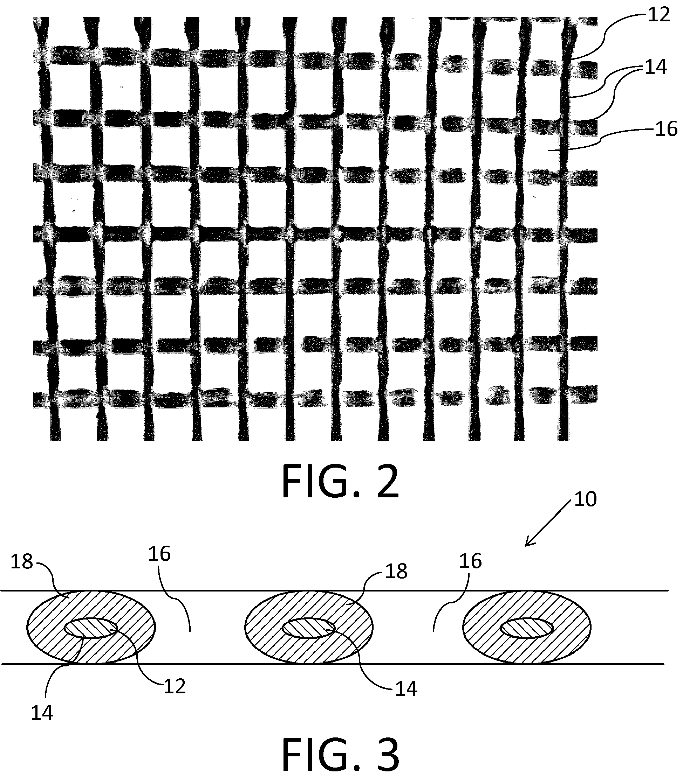

Referring to FIG. 2, intumescent mesh 10 has a mesh structure 12 formed by weaving non-metal strands 14 that define a series of openings 16 in mesh structure 12. Mesh structure 12 may have ¼" +/- 1/16" (6.35 mm +/- 1.59 mm) openings. In some examples, the tolerance may vary, such as down to 0.05" (1.27 mm), or 0.06" (1.52 mm).

Weaving mesh structure 12 enhances its strength and durability. While different weave patterns may be used, in one example, adequate results were achieved using a modified weave pattern, such as a modified Leno weave pattern that may be described as half-Leno, depicted in FIG. 2. While a Leno weave provided adequate strength, more consistent sizes of openings were achieved by modifying the Leno weave. The modification reduced the strength of mesh structure 12 relative to a full Leno weave, however the consistency of the size of openings 16 was enhanced, making it easier to achieve the desired tolerances, such as when producing a mesh with openings of about ¼ +/- 1/16 inch (6.35 mm +/- 1.59 mm).

It will be understood that the height and width of the openings may vary depending on various factors, such as the type of weave used, the equipment used to implement the weave pattern, the type of fibreglass used, or the preferences of a user. As shown in FIG. 2, the height may vary from the width, although it is preferably for the relative sizes to remain relatively close. This may be done, for example to achieve a desired distribution of material or a desired strength profile along one or more directions of the mesh. The dimensions of openings 16 may also vary depending on the thickness of the strands in a given direction, as can be seen in FIG. 2. It will be understood that square openings 16 provides the most efficient use of surface area when considering the amount of intumescent material applied to mesh structure 12 and the size of openings 16, which allow for airflow to the underlying structure.

Non-metal strands 14 are made from fibreglass or, in examples outside the scope of the claimed invention, may be made from various materials, such as natural fibres or cellulose (hemp, flax, etc.), mineral-based fibres (basalt, etc.), polymer-based, or composite. It was found that woven fibreglass strands provided adequate results, and in the discussion below, mesh structure 12 will be discussed in terms of fibreglass strands 14. However, it will be understood that mesh structure 12, in examples outside the scope of the claimed invention, may be woven from other non-metal materials, provided that they have adequate structural properties, which may include properties such as tensile strength, durability, tear-resistance, etc. and may be nonconductive, non-magnetic, and/or chemically inert, depending on the intended application.

Fibreglass strands 14 are typically made from glass fibres embedded in a carrier material, typically a polymer, such as a blend of suitable acrylic copolymers, thermoset polymers, etc. As such, fibreglass may also be referred to as fibre-reinforced plastic or glass-reinforced plastic. The type of polymer and glass used may be selected based on desirable properties, such as cost, strength, etc. A common type of glass fibre used in fibreglass is E-glass, which is used in the example discussed below. Other types of glass fibres may also be used.

Fibreglass strands 14 are often finished with a surface coating, such as resins, if required to provide certain properties or characteristics. This may or may not be required, depending on the materials used to fabricate strands 14. As glass is generally smooth and may be difficult to adhere to intumescent material, the surface of strands 14 may be functionalized to improve adhesion between strands 14 and intumescent material 18 during or after manufacturing. In some cases, this may involve applying a non-waterproof coating, such as a hydrophilic coating. The surface of strands 14 may be functionalized in other ways and using other techniques other than applying a suitable coating.

The coating selected to finish strands 14 may have a negative impact on the initial fire protective properties of intumescent mesh 10 but may be selected to improve the adhesion of intumescent material 18 to strands 14 or other properties. The coating may also be selected to provide some high-temperature protection to fibreglass strands 14, such as to reduce the likelihood of cracking at high-temperatures. It will be understood that other examples of mesh structure 12 may be used, provided that the materials and dimensions are adequate for the intended purpose.

In one example, specifications of a fibreglass mesh structure 12 may be as follows:

| **Property** | | Imperial (Metric) |
|---|---|---|
| Construction: | | |
| | Warp: | 3.4 yams/inch (13.4 yams/10 cm) |
| | Weft: | 2.8 yams/inch (11.2 yams/10 cm) |
| Weight: | | 9.88 oz/yd² (335 g/m²) |
| Thickness: | | 0.041/inch (1.05/mm) |
| Weave: | | Half-Leno |

| Nominal Tensile: | | |
|---|---|---|
| | Warp: | 450 lb/in (2000 N/2.54cm) |
| | Weft: | 450 lb/in (2000 N/2.54cm) |

Referring to FIG. 3, intumescent material 18 is applied to mesh structure 12 to form intumescent mesh 10. Intumescent coating 18 is made using expandable graphite as a primary intumescent compound and a polymer-based carrier. According to the invention, a suitable formula is as follows: acrylic copolymer (35-56 w/w %), ammonium polyphosphate (3-21 w/w%), expandable graphite (3-21 w/w %), silica (<1 w/w %), and fibreglass mesh (30-49 w/w %). In this example, the expandable graphite and ammonium polyphosphate primarily contribute to the intumescent properties, while the acrylic copolymer blend is the primary carrier for the expandable graphite.

Modifications to this formula may be made, with some components being added as will be recognized by those skilled in the art. For example, several additional intumescing or char-forming components may be added to the intumescent coating 18 blend to enhance fire properties, durability, appearance, curing time, etc. These additives may include sodium borates such as disodium octaborate tetrahydrate, boric acid, boric oxide, zinc borate, zinc oxide, titanium dioxide, melamine, aluminum hydroxide, magnesium hydroxide, etc.

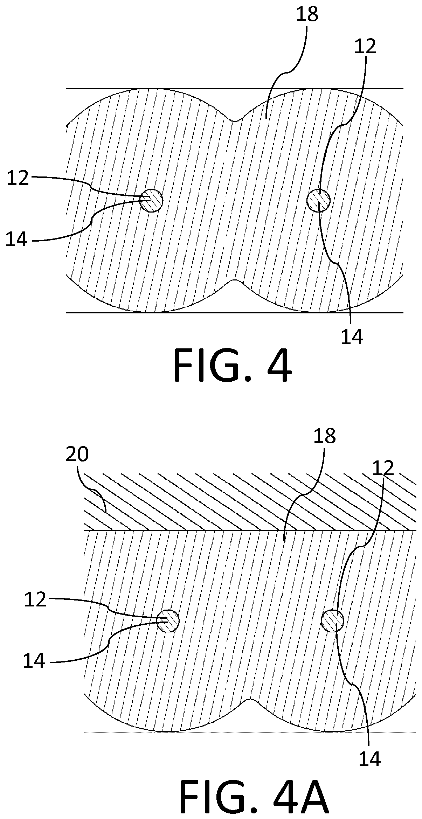

Intumescent coating 18, along with mesh structure 12, may be designed to be suitable for fire-prevention purposes within a specified temperature range, such as may be experienced in a wild-fire setting such as may occur in a forest setting or a brush-covered area, or in a residential or commercial area. Intumescent coating 18 is designed to have an activation temperature above which it swells, as showing in FIG. 4. The activation temperature is preferably at least 520°F (270°C) and may be varied higher or lower than this temperature by selecting an appropriate type of expandable graphite, by incorporating other intumescent components into the blend, by modifying the blend to allow for faster expansion, etc.

Below are the results of tests performed on a fibreglass intumescent mesh with ¼ inch openings, and about 0.13 lb/sq ft. (0.63 kg/m²) of intumescent material 18 applied to mesh 12:
- **High Temperature Test:** In a short-term, high temperature test, 2- and 3-minute bum tests were performed by applying a direct flame at the base and measuring temperatures and total heat energy for the whole duration of the test. The samples were wood poles wrapped with the intumescent mesh, which were then inserted into the test apparatus and exposed to flames and heat at temperatures greater than 2100°F (1150°C). The peak temperatures in this test periodically reached about 2300°F (1260°C). The intumescent mesh was exposed to a maximum heat energy of 19,576 kW- sec/m². The samples in this test experienced very little to no surface scorching or strength loss.
- **ASTM Standardized Test:** In accordance with a standardized ASTM test for testing flame resistance, wooden poles were wrapped in the intumescent mesh and placed 1ft from a radiant heat panel set to 1800°F (about 980°C) for 5 minutes and then exposed to both a ring burner and the radiant heat panel for another 5 minutes, for a total of 10 minutes. The samples were exposed to a heat flux of 50 kW/m² and a heat energy of over 30,000 kw-sec/m². Some strength loss was experienced in these tests due to radial shrinkage of the wooden poles, however the char depth on the surface of the test specimens was less than 1/16".
- **Burn-Through Test:** The intumescent mesh was applied to an engineered form of wood (in this case, a ½" thick block of douglas fir plywood) and exposed to a cone calorimeter set to 1800°F (about 980°C) until the point of failure, or burn-through, was reached. Burn-through is defined as the moment at which the thermocouple set behind the engineered wood reaches a temperature of 300°F (about 150°C) and not necessarily when the wood is exposed to flames. Failure was reached at 905 seconds. Of note, in a similar test using an intumescent mesh made from a steel mesh, failure was reached at 796 seconds.

During testing, it was noted that, relative to an intumescent mesh of a similar size but based on a wire grid instead of a woven fibreglass grid, the initial activation of intumescent coating 18 was slower and resulted in an initial spike in temperature across intumescent mesh 10. However, intumescent mesh 10 made from woven fibreglass mesh structure 12 lasted longer than the metal mesh structures, despite the fact that fibreglass will typically fail at a lower temperature than metal. It is believed that this is due to the lower thermal-conductivity of fibreglass relative to metal. It is further believed that, as metal conducts heat more quickly, a metal mesh will apply heat to intumescent coating 18 more quickly, which causes a faster activation period, but may also lead to premature failure based on the same reasons. These observations were observed even though fibreglass tends to soften at around 850°C, depending on the type of fibreglass.

In other examples, outside the scope of the present invention, fibres other than fibreglass may be used, such as cellulose fibres and coated with intumescent coating 18. In these examples, suitable additives or coatings may be selected to improve properties and allow for sufficient structural strength in high temperature applications.

Preferably, intumescent mesh 10 coating 18 is sufficiently flexible to avoid spalling, flaking, cracking, chipping or otherwise falling off the flexible mesh structure 12 as mesh 10 is manipulated and bent such as may occur during transport or installation. In some examples, this may require intumescent mesh 10 to bend around 90-degree corners, bend around curved surfaces, fold in half or nearly in half, etc. In general, mesh 10 may be flexible but may not retain the shape as may be the case with a metal mesh. In such a case, fasteners or other structural members may be used to retain the shape after or during installation. Intumescent mesh 10 may be designed to be used in outdoor applications where intumescent coating 18 is exposed to the elements without degrading, or to degrade a desired amount over a predetermined time period. Depending on the climate of a given installation location, intumescent coating 18 may be modified to withstand higher or lower temperatures, or to have improved protection against moisture, UV degradation, etc. In this manner, intumescent coating 18 may be designed to withstand temperature extremes that may be encountered, such as low temperatures that may be encountered in cold climates, and the high temperatures that may be encountered in warm climates, and when exposed to direct sunlight without expanding or swelling prematurely. In one example, intumescent coating 18 may be designed to satisfy a standardized accelerated weathering test known as ASTM G-154. This test is designed to accelerate the breakdown of materials but overexposures of extreme heat, UV, and condensation. Intumescent coating 18 may be designed to withstand exposures of this test and maintain adhesion of the coating 18 to mesh structure 12 without breakdown.

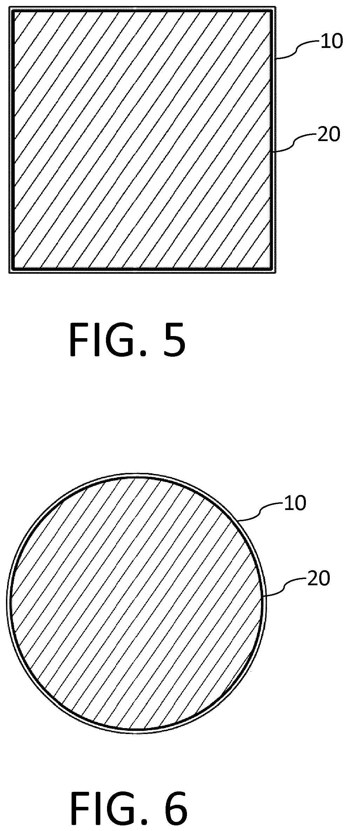

Referring to FIG. 5 and 6, intumescent mesh 10 is intended to allow for airflow. This may be beneficial to limit moisture exposure to structures or surfaces that may be otherwise adversely affected by allowing water to drain, and the underlying surface to dry. This is shown in FIG. 5 and 6. Preferably, intumescent mesh 10 is installed tightly and immediately against a structure 20 such that, as intumescent coating 18 is activated by exposure to high temperatures, it expands or swells, intumescent coating 18 seals openings 10. Intumescent coating may also swell and seal against structure 20 to displace any air adjacent to the structure and to prevent further airflow between intumescent mesh 10 and structure 20, such that the presence of air to fuel a fire is limited.

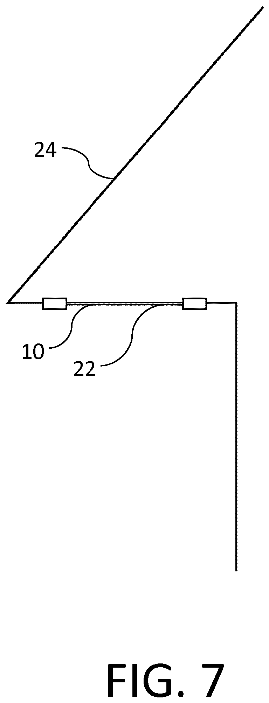

Referring to FIG. 7, intumescent mesh 10 may be installed as a soffit 22 of a building 24. When applied in soffit 22, intumescent mesh 10 allows sufficient air to pass through soffit 2 to allow airflow that is used to cool and/or limit the accumulation of moisture in the attic, while sealing soffit 22 in a high heat event or fire.

As noted above, it has been found that a mesh size of about ¼ ± 1/16 inches, with an adequately thick intumescent coating 18 may provide a desired level of passive fire protection, while still allowing for sufficient airflow through intumescent mesh 10. In one example, suitable airflow may be achieved when openings 16 account for between about 25-75% of the area of intumescent mesh 10. When the intumescent coating 18 is exposed to temperatures at or above the activation temperature, intumescent coating 18 swells to seal openings 16 and prevent airflow through intumescent mesh 10.

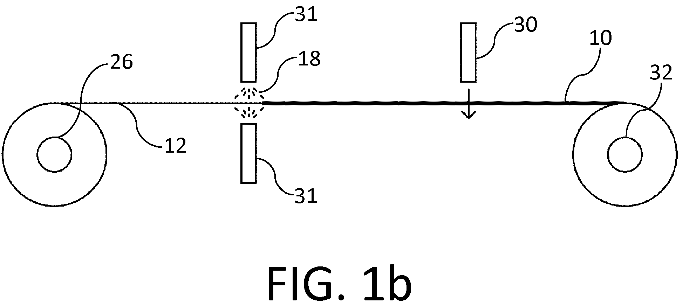

Referring to FIG. 1, intumescent mesh 10 may be manufactured by using a modified weave pattern to achieve a desired size for openings 16, which provides for adequate air flow and suitable strength, ability to be coated, adhesive properties, and allows the shape configuration to be maintained in outdoor applications. In one example, the modified Leno weave pattern of fibreglass strands as discussed above met ASTM d-5035 specifications for tensile strength, ASTM D-1777 specifications for thickness, ASTM D-3776 and ASTM D-3775 specifications for weight construction.

In one example, referring to FIG. 1a, intumescent mesh 10 may manufactured by providing a first roll 26 of mesh structure 12, which passes through a bath 28 filled with a liquid intumescent material 18. After passing through bath 28, mesh structure is coated with intumescent material 18, which may then pass by a source of air pressure 30, such as an air knife. This may be used to apply air pressure to intumescent mesh 10 that is sufficiently strong to prevent windowing across openings 16 in intumescent mesh 10 that may otherwise be closed by the surface tension of liquid intumescent material 18, while being insufficiently strong to remove a significant portion of intumescent material 18 from mesh structure 12 prior to curing. Intumescent material 18 is permitted to cure and harden into a solid and form a film before being rolled onto a second roll 32. Depending on the necessary thickness of intumescent material 18 and the viscosity of intumescent material 18 in bath 28, multiple passes may be required to meet the desired specifications. In addition, by passing mesh structure 12 through bath 28, all sides of the strands in mesh structure 12 are coated.

In another example, referring to FIG. 1b, intumescent mesh 10 may be manufactured by spraying intumescent coating 18 onto flexible mesh 12. A suitable spray line or spray system 31 may be under a regulated pressure to evenly distribute intumescent material 18 on mesh structure 12 as mesh structure 12 moves between rolls 26 and 32. The speed at which mesh structure 12 is passed along spray system 31 may be varied to allow for different thicknesses to be achieved. The spray system may spray on both planes in order to coat all sides of mesh structure 12 as shown, or mesh structure 12 may be run through the spray line twice in order to sufficiently coat both sides. Alternatively, intumescent material 18 may be applied to a single side. If required, air pressure may be applied using source 30.

The dimensions of intumescent mesh 10 will vary depending on it's intended use and application. In one example, a roll that is 3-4 feet wide and 50 feet long may be made that is small and light enough to be handled by a single worker without strain. Other dimensions may also be used depending on the intended used and preference of the user. Those skilled in the art will be able to make any necessary modifications to the equipment for making and handling the intended size of intumescent mesh 10.

Electrical conductivity of fibreglass is a similar format to wirecloth however fibreglass is weaker and frail in a simplistic format that would compare to wirecloth. It will fail in industrial applications such as wood power poles and cross arms.

A typical roll may be 3 ft x 50 ft (0.91 m x 15.2 m) for a total of 150 sq.ft. (13.9 m²), and will weigh about 10.8 lbs (4.90 kg)

In this patent document, the word "comprising" is used in its non-limiting sense to mean that items following the word are included, but items not specifically mentioned are not excluded. A reference to an element by the indefinite article "a" does not exclude the possibility that more than one of the elements is present, unless the context clearly requires that there be one and only one of the elements.

The scope of the following claims should not be limited by the preferred embodiments set forth in the examples above and in the drawings but should be given the broadest interpretation consistent with the description as a whole.

## Claims

1. An intumescent mesh (10), comprising:
a mesh structure (12) woven from strands (14), the strands (14) defining openings (16) in the mesh structure (12), the strands (14) being non-metal; and
an intumescent material (18) applied to the strands (14), the intumescent material (18) being carried such that, in an inactivated state the intumescent material (18) permits airflow through the openings (16) in the mesh structure (12), and in an activated state, the intumescent material (18) swells and restricts airflow through the openings (16) in the mesh structure (12);
wherein the intumescent mesh (10) is able to withstand a temperature of at least 980°C for at least 10 minutes prior to failure wherein failure is achieved when a temperature of 150°C is reached behind a 12.7 mm thick engineered form of wood on which the intumescent mesh (10) is installed when exposed to a cone calorimeter of 980°C;
wherein the intumescent mesh (10) comprises acrylic copolymer (35-56 w/w %), ammonium polyphosphate (3-21 w/w%), expandable graphite (3-21 w/w %), silica (<1 w/w %), and fibreglass mesh (30-49 w/w %), and the openings (16) in the mesh structure (12) are between about 4.57 mm (0.18 inches) and about 8.13 mm (0.32 inches) along a width and height.

2. The intumescent mesh (10) of claim 1, wherein the openings (16) in the mesh structure (12):
have an average size of about 6.35 +/- 1.52 mm (0.25 +/- 0.06 inches); or
have an available airflow area of about 25-75% of the mesh structure (12) based on the size of the intumescent material (18) and strands (14).

3. The intumescent mesh (10) of claim 1, wherein the strands (14) are woven in a half Leno weave.

4. The intumescent mesh (10) of claim 1, wherein:
the intumescent material (18) is activated at a temperature of at least 270°C;
the intumescent mesh (10) is able to withstand the temperature of at least 980°C for at least 15 minutes prior to failure; or
the intumescent mesh (10) is able to withstand temperature surges of up to 1250°C for at least 1 minute without failure.

5. The intumescent mesh (10) of claim 1, wherein the mesh structure (12) with the intumescent material (18) applied is flexible or foldable.

6. The intumescent mesh (10) of claim 1, further comprising a surface coating applied between the mesh structure (12) and the intumescent material (18), the surface coating being selected to improve adhesion between the mesh structure (12) and the intumescent material (18).

7. A method of protecting a surface against fire or heat, comprising the steps of:
providing an intumescent mesh (10) comprising an intumescent material (18) applied to a mesh structure (12), the mesh structure (12) being woven from strands (14) that define openings (16) in the mesh structure (12), the strands (14) being non-metal, the intumescent material (18) being carried such that, in an inactivated state the intumescent material (18) permits airflow through the openings (16) in the mesh structure (12), and in an activated state the intumescent material (18) swells and restricts airflow through the openings (16) in the mesh structure (12), the intumescent material (18) being activated upon application of an activation temperature, the intumescent mesh (10) is able to withstand a temperature of at least 980°C for at least 10 minutes prior to failure wherein failure is achieved when a temperature of 150°C is reached behind a 12.7 mm thick engineered form of wood on which the intumescent mesh (10) is installed when exposed to a cone calorimeter of 980°C; and
installing the intumescent material (18) immediately adjacent to the surface to be protected;
wherein the intumescent mesh (10) comprises acrylic copolymer (35-56 w/w %), ammonium polyphosphate (3-21 w/w%), expandable graphite (3-21 w/w %), silica (<1 w/w %), and fibreglass mesh (30-49 w/w %), and the openings (16) in the mesh structure (12) are between about 4.57 mm (0.18 inches) and about 8.13 mm (0.32 inches) along a width and height.

8. The method of claim 7, wherein the intumescent material (18) is installed such that, in the activated state, the intumescent material (18) is in contact with the surface to be protected.

9. The method of claim 7, wherein the openings (16) in the mesh structure (12) are:
about 6.35 +/- 1.52 mm (0.25 +/- 0.06 inches); or
sized such that an available airflow area of the openings (16) in the mesh structure (12) is about 25-75% of the mesh structure (12).

10. The method of claim 7, wherein the strands (14) are woven using a half-Leno weave.

11. The method of claim 7, wherein:
the intumescent material (18) is activated at a temperature of at least 270°C;
the intumescent mesh (10) is able to withstand the temperature of at least 980°C for at least 15 minutes prior to failure; or
the intumescent mesh (10) is able to withstand temperature surges of up to 1250°C for at least 1 minute without failure.

12. The method of claim 7, wherein the intumescent mesh (10) is flexible or foldable.

13. The method of claim 7, further comprising a surface coating applied between the mesh structure (12) and the intumescent material (18), the surface coating being selected to improve an adhesion between the mesh structure (12) and the intumescent material (18).

## Patentansprüche

1. Intumeszierendes Netz (10), das Folgendes umfasst:
eine Netzstruktur (12), die aus Strängen (14) gewebt ist, wobei die Stränge (14) Öffnungen (16) in der Netzstruktur (12) definieren, wobei die Stränge (14) nichtmetallisch sind; und
ein auf die Stränge (14) aufgetragenes intumeszierendes Material (18), wobei das intumeszierende Material (18) so getragen wird, dass das intumeszierende Material (18) in einem inaktivierten Zustand einen Luftstrom durch die Öffnungen (16) in der Netzstruktur (12) ermöglicht und das intumeszierende Material (18) in einem aktivierten Zustand aufquillt und den Luftstrom durch die Öffnungen (16) in der Netzstruktur (12) einschränkt;
wobei das intumeszierende Netz (10) einer Temperatur von mindestens 980 °C mindestens 10 Minuten lang widerstehen kann, bevor es versagt, wobei ein Versagen erfolgt, wenn eine Temperatur von 150 °C hinter einer 12,7 mm dicken Kunstholzform erreicht wird, auf der das intumeszierende Netz (10) montiert ist, wenn es gegenüber einem Kegel-Kalorimeter mit 980 °C exponiert wird;
wobei das intumeszierende Netz (10) ein Acryl-Copolymer (35-56 Gew.-%), Ammoniumpolyphosphat (3-21 Gew.-%), Blähgraphit (3-21 Gew.-%), Siliciumdioxid (<1 Gew.-%) und ein Glasfasernetz (30-49 Gew.-%) umfasst und die Öffnungen (16) in der Netzstruktur (12) entlang einer Breite und Höhe zwischen etwa 4,57 mm (0,18 Inch) und etwa 8,13 mm (0,32 Inch) betragen.

2. Intumeszierendes Netz (10) nach Anspruch 1, wobei die Öffnungen (16) in der Netzstruktur (12):
eine durchschnittliche Größe von etwa 6,35 +/- 1,52 mm (0,25 +/- 0,06 Inch) aufweisen oder
eine verfügbare Luftstromfläche von etwa 25-75 % der Netzstruktur (12), bezogen auf die Größe des intumeszierenden Materials (18) und der Stränge (14), aufweisen.

3. Intumeszierendes Netz (10) nach Anspruch 1, wobei die Stränge (14) in einer Halbdreherbindung gewebt sind.

4. Intumeszierendes Netz (10) nach Anspruch 1, wobei:
das intumeszierende Material (18) bei einer Temperatur von mindestens 270°°C aktiviert wird;
das intumeszierende Netz (10) der Temperatur von mindestens 980°°C mindestens 15 Minuten lang standhalten kann, bevor es versagt, oder
das intumeszierende Netz (10) Temperaturstößen bis 1250 °C mindestens 1 Minute lang widerstehen kann, ohne zu versagen.

5. Intumeszierendes Netz (10) nach Anspruch 1, wobei die Netzstruktur (12) mit dem aufgetragenen intumeszierenden Material (18) biegsam oder faltbar ist.

6. Intumeszierendes Netz (10) nach Anspruch 1, das weiterhin eine Oberflächenbeschichtung umfasst, die zwischen der Netzstruktur (12) und dem intumeszierenden Material (18) aufgetragen ist, wobei die Oberflächenbeschichtung so ausgewählt ist, dass sie die Haftung zwischen der Netzstruktur (12) und dem intumeszierenden Material (18) verbessert.

7. Verfahren zum Schützen einer Oberfläche gegen Feuer oder Wärme, dass die folgenden Schritte umfasst:
das Bereitstellen eines intumeszierenden Netzes (10),
das ein intumeszierendes Material (18) umfasst, das auf eine Netzstruktur (12) aufgetragen ist, wobei die Netzstruktur (12) aus Strängen (14) gewebt ist, die Öffnungen (16) in der Netzstruktur (12) definieren,
wobei die Stränge (14) nichtmetallisch sind, wobei das intumeszierende Material (18) so getragen wird, dass das intumeszierende Material (18) in einem inaktivierten Zustand einen Luftstrom durch die Öffnungen (16) in der Netzstruktur (12) ermöglicht und das intumeszierende Material (18) in einem aktivierten Zustand quillt und den Luftstrom durch die Öffnungen (16) in der Netzstruktur (12) einschränkt, wobei das intumeszierende Material (18) bei der Einwirkung einer Aktivierungstemperatur aktiviert wird, das intumeszierende Netz (10) einer Temperatur von mindestens 980 °C mindestens 10 Minuten lang widerstehen kann, bevor es versagt, wobei ein Versagen erfolgt, wenn eine Temperatur von 150 °C hinter einer 12,7 mm dicken Kunstholzform erreicht wird, auf der das intumeszierende Netz (10) montiert ist, wenn es gegenüber einem Kegel-Kalorimeter mit 980 °C exponiert wird; und
das Anbringen des intumeszierenden Materials (18) unmittelbar neben der zu schützenden Oberfläche;
wobei das intumeszierende Netz (10) ein Acryl-Copolymer (35-56 Gew.-%), Ammoniumpolyphosphat (3-21 Gew.-%), Blähgraphit (3-21 Gew.-%), Siliciumdioxid (<1 Gew.-%) und ein Glasfasernetz (30-49 Gew.-%) umfasst und die Öffnungen (16) in der Netzstruktur (12) entlang einer Breite und Höhe zwischen etwa 4,57 mm (0,18 Inch) und etwa 8,13 mm (0,32 Inch) betragen.

8. Verfahren nach Anspruch 7, wobei das intumeszierende Material (18) so montiert ist, dass sich das intumeszierende Material (18) im aktivierten Zustand in Kontakt mit der zu schützenden Oberfläche befindet.

9. Verfahren nach Anspruch 7, wobei die Öffnungen (16) in der Netzstruktur (12):
etwa 6,35 +/- 1,52 mm (0,25 +/- 0,06 Inch) aufweisen oder so bemessen sind, dass eine verfügbare Luftstromfläche der Öffnungen (16) in der Netzstruktur (12) etwa 25-75 % der Netzstruktur (12) beträgt.

10. Verfahren nach Anspruch 7, wobei die Stränge (14) mittels einer Halbdreherbindung gewebt sind.

11. Verfahren nach Anspruch 7, wobei:
das intumeszierende Material (18) bei einer Temperatur von mindestens 270°°C aktiviert wird;
das intumeszierende Netz (10) der Temperatur von mindestens 980°°C mindestens 15 Minuten lang standhalten kann, bevor es versagt, oder
das intumeszierende Netz (10) Temperaturstößen bis 1250 °C mindestens 1 Minute lang widerstehen kann, ohne zu versagen.

12. Verfahren nach Anspruch 7, wobei das intumeszierende Netz (10) biegsam oder faltbar ist.

13. Verfahren nach Anspruch 7, das weiterhin eine Oberflächenbeschichtung umfasst, die zwischen der Netzstruktur (12) und dem intumeszierenden Material (18) aufgetragen ist, wobei die Oberflächenbeschichtung so ausgewählt ist, dass eine Haftung zwischen der Netzstruktur (12) und dem intumeszierenden Material (18) verbessert wird.

## Revendications

1. Maille intumescente (10), comprenant :
une structure de maille (12) tissée à partir de brins (14), les brins (14) définissant des ouvertures (16) dans la structure de maille (12), les brins (14) étant non métalliques ; et
un matériau intumescent (18) appliqué sur les brins (14), le matériau intumescent (18) étant porté de telle sorte que, dans un état inactivé, le matériau intumescent (18) permette un écoulement d'air à travers les ouvertures (16) dans la structure de maille (12), et dans un état activé, le matériau intumescent (18) gonfle et limite le flux d'air à travers les ouvertures (16) dans la structure de maille (12) ;
dans laquelle la maille intumescente (10) peut résister à une température d'au moins 980 °C pendant au moins 10 minutes avant rupture, une rupture étant obtenue lorsqu'une température de 150 °C est atteinte derrière une forme modifiée d'une épaisseur de 12,7 mm de bois sur laquelle la maille intumescente (10) est installée lorsqu'elle est exposée à un calorimètre à cône de 980 °C ;
dans laquelle la maille intumescente (10) comprend un copolymère acrylique (35-56 % en poids), du polyphosphate d'ammonium (3-21 % en poids), du graphite expansible (3-21 % en poids), de la silice (<1 % en poids) et une maille de fibres de verre (30-49 % en poids), et les ouvertures (16) dans la structure de maille (12) sont comprises entre environ 4,57 mm (0,18 pouce) et environ 8,13 mm (0,32 pouce) le long d'une largeur et une hauteur.

2. Maille intumescente (10) selon la revendication 1, dans laquelle les ouvertures (16) dans la structure de maille (12) :
ont une taille moyenne d'environ 6,35 +/- 1,52 mm (0,25 +/- 0,06 pouce) ; ou
ont une zone d'écoulement d'air disponible d'environ 25-75 % de la structure de maille (12) par rapport à la taille du matériau intumescent (18) et des brins (14).

3. Maille intumescente (10) selon la revendication 1, dans laquelle les brins (14) sont tissés en une armure demi-Leno.

4. Maille intumescente (10) selon la revendication 1, dans laquelle :
le matériau intumescent (18) est activé à une température d'au moins 270 °C ;
la maille intumescente (10) peut résister à une température d'au moins 980 °C pendant au moins 15 minutes avant rupture ; ou
la maille intumescente (10) est capable de résister à des pics de température allant jusqu'à 1 250 °C pendant au moins 1 minute sans rupture.

5. Maille intumescente (10) selon la revendication 1, dans laquelle la structure de maille (12) comportant le matériau intumescent (18) appliqué est flexible ou pliable.

6. Maille intumescente (10) selon la revendication 1, comprenant en outre un revêtement de surface appliqué entre la structure de maille (12) et le matériau intumescent (18), le revêtement de surface étant sélectionné pour améliorer l'adhérence entre la structure de maille (12) et le matériau intumescent (18).

7. Procédé de protection d'une surface contre le feu ou la chaleur, comprenant les étapes de :
fourniture d'une maille intumescente (10) comprenant un matériau intumescent (18) appliqué sur une structure de maille (12), la structure de maille (12) étant tissée à partir de brins (14) définissant des ouvertures (16) dans la structure de maille (12), les brins (14) étant non métalliques, le matériau intumescent (18) étant porté de telle sorte que, dans un état inactivé, le matériau intumescent (18) permette un écoulement d'air à travers les ouvertures (16) dans la structure de maille (12), et, à l'état activé, le matériau intumescent (18) gonfle et limite le flux d'air à travers les ouvertures (16) dans la structure de maille (12), le matériau intumescent (18) étant activé lors de l'application d'une température d'activation, la maille intumescente (10) étant capable de résister à une température d'au moins 980 °C pendant au moins 10 minutes avant rupture, une rupture étant obtenue lorsqu'une température de 150 °C est atteinte derrière une forme modifiée d'une épaisseur de 12,7 mm de bois sur laquelle la maille intumescente (10) est installée lorsqu'elle est exposée à un calorimètre à cône de 980 °C ; et
installation du matériau intumescent (18) immédiatement adjacent à la surface à protéger ;
dans laquelle la maille intumescente (10) comprend un copolymère acrylique (35-56 % en poids), du polyphosphate d'ammonium (3-21 % en poids), du graphite expansible (3-21 % en poids), de la silice (<1 % en poids) et une maille de fibres de verre (30-49 % en poids), et les ouvertures (16) dans la structure de maille (12) sont comprises entre environ 4,57 mm (0,18 pouce) et environ 8,13 mm (0,32 pouce) le long d'une largeur et une hauteur.

8. Procédé selon la revendication 7, dans lequel le matériau intumescent (18) est installé de telle sorte que, à l'état activé, le matériau intumescent (18) est en contact avec la surface à protéger.

9. Procédé selon la revendication 7, dans lequel les ouvertures (16) dans la structure de maille (12) sont :
environ 6,35 +/- 1,52 mm (0,25 +/- 0,06 pouce) ; ou
dimensionnées de telle sorte qu'une zone d'écoulement d'air disponible des ouvertures (16) dans la structure de maille (12) soit d'environ 25-75 % de la structure de maille (12).

10. Procédé selon la revendication 7, dans lequel les brins (14) sont tissés en utilisant une armure demi-Leno.

11. Procédé selon la revendication 7, dans lequel :
le matériau intumescent (18) est activé à une température d'au moins 270 °C ;
la maille intumescente (10) peut résister à une température d'au moins 980 °C pendant au moins 15 minutes avant rupture ; ou
la maille intumescente (10) est capable de résister à des pics de température allant jusqu'à 1 250 °C pendant au moins 1 minute sans rupture.

12. Procédé selon la revendication 7, dans lequel la maille intumescente (10) est flexible ou pliable.

13. Procédé selon la revendication 7, comprenant en outre un revêtement de surface appliqué entre la structure de maille (12) et le matériau intumescent (18), le revêtement de surface étant sélectionné pour améliorer une adhérence entre la structure de maille (12) et le matériau intumescent (18).
